(19) Europäisches Patentamt
European Patent Office
Office européen des brevets

(11) Veröffentlichungsnummer: **0 480 228 A2**

(12) # EUROPÄISCHE PATENTANMELDUNG

(21) Anmeldenummer: **91116177.6**

(51) Int. Cl.5: **C08K 5/07**, C08L 77/00

(22) Anmeldetag: **24.09.91**

(30) Priorität: **06.10.90 DE 4031724**

(43) Veröffentlichungstag der Anmeldung:
**15.04.92 Patentblatt 92/16**

(84) Benannte Vertragsstaaten:
**BE CH DE ES FR GB LI NL**

(71) Anmelder: **BASF Aktiengesellschaft**
**Carl-Bosch-Strasse 38**
**W-6700 Ludwigshafen(DE)**

(72) Erfinder: **Blinne, Gerd, Dr.**
**Im Woogtal 7**
**W-6719 Bobenheim(DE)**
Erfinder: **Goetz, Walter, Dr.**
**Dhauner Strasse 79**
**W-6700 Ludwigshafen(DE)**
Erfinder: **Hurley, James, Dr.**
**Naumburger Weg 4**
**W-6800 Mannheim 31(DE)**
Erfinder: **Gutsche, Herbert**
**Koenigsberger Strasse 4**
**W-6711 Beindersheim(DE)**
Erfinder: **Muehlbach, Klaus, Dr.**
**Dr.-Heinrich-Winter-Strasse 19**
**W-6148 Heppenheim(DE)**

(54) **Thermoplastische Formmassen auf der Basis von Polyamid.**

(57) Thermoplastische Formmassen, enthaltend als wesentliche Komponenten
A) 96 bis 99,9 Gew.-% mindestens eines Polyamids
B) 0,1 bis 4 Gew.-% an Dialkylketonen der allgemeinen Formel I

$$R-\overset{\overset{\displaystyle O}{\|}}{C}-R' \qquad \text{I}$$

in der R und R' Alkylgruppen mit 10 bis 30 C-Atomen bedeuten, oder deren Mischungen,
sowie, bezogen auf die Summe der Komponenten A) + B)
C) 0 bis 40 Gew.-% eines schlagzäh modifizierenden Kautschuks
D) 0 bis 60 Gew.-% faser- oder teilchenförmige Füllstoffe oder deren Mischungen und
E) 0 bis 120 Gew.-% eines modifizierten Polyphenylenethers.

EP 0 480 228 A2

Die vorliegende Erfindung betrifft thermoplastische Formmassen, enthaltend als wesentliche Komponenten

A) 96 bis 99,9 Gew.-% mindestens eines Polyamids

B) 0,1 bis 4 Gew.-% an Dialkylketonen der allgemeinen Formel I

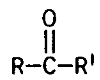

I

in der R und R' Alkylgruppen mit 10 bis 30 C-Atomen bedeuten, oder deren Mischungen,

sowie, bezogen auf die Summe der Komponenten A) und B)

C) 0 bis 40 Gew.-% eines schlagzäh modifizierenden Kautschuks

D) 0 bis 60 Gew.-% faser- oder teilchenförmige Füllstoffe oder deren Mischungen und

E) 0 bis 120 Gew.-% eines modifizierten Polyphenylenethers.

Außerdem betrifft die Erfindung Verfahren zur Herstellung dieser thermoplastischen Formmassen, deren Verwendung zur Herstellung von Fasern, Folien und Formkörpern sowie die hierbei erhältlichen Formkörper.

Polyamide wie Poly-$\epsilon$-Caprolactam und Polyhexamethylenadipinsäureamidzählen zu den seit langem bekannten technischen Kunststoffen und haben auf vielen Gebieten Anwendung gefunden. Sie zeichnen sich im allgemeinen durch eine große Härte, Steifigkeit und eine gute Wärmeformbeständigkeit aus, sind darüber hinaus widerstandsfähig gegen Abrieb und Verschleiß und auch beständig gegen viele Chemikalien. Mischungen von Polyamiden mit Polyphenylenethern weisen im allgemeinen gute Gebrauchseigenschaften auf, da bei ausreichender Phasenhaftung eine Kombination der Eigenschaften der beiden Polymeren erzielt werden kann wie gute Zähigkeit bei hoher Steifigkeit, Chemikalienresistenz und Wärmeformbeständigkeit.

Bei der Verarbeitung von Polyamiden oder Blends aus PPE/PA, insbesondere beim Spritzguß, werden i.a. zur Verbesserung des Einzugs- und Entformungsverhaltens Schmiermittel zugesetzt.

So beschreibt die DE-A 37 06 356 ein Polyamid-Granulat mit einer äußeren Schmiermittelbeschichtung aus Zn-, Al- und Ca-Stearat sowie $C_2$- bis $C_{24}$-Estern aliphatischer Carbonsäuren mit 6 bis 24 C-Atomen.

Aus der DE-A 23 49 835 ist der Zusatz von Ca- oder Zn-Stearat zu Polyamid-Formmassen bekannt.

Die JP-OS 62 119267 beschreibt eine Mischung aus Polyamid, hydroxylgruppen-enthaltende Metallstearate und Li-Stearat.

Aus der EP-A 234 060 sind PPE/PA-Blends bekannt, die als Schmiermittel Ester aus langkettigen Carbonsäuren und mindestens dreiwertigen Alkoholen enthalten.

Weiterhin wird in der EP-A 308 671 der Zusatz von langkettigen Fettsäuren, Säurechloriden oder Anhydriden zu PPE/PA-Blends beschrieben.

Der Zusatz dieser Schmiermittel führt jedoch zu einem Molekulargewichtsabbau, verbunden mit einem Zähigkeitsverlust bei der Verarbeitung von Polyamiden, besonders bei höherer Temperatur. Dieser Effekt tritt insbesondere bei hochschmelzenden Polyamiden wie Copolyamiden aus $\epsilon$-Caprolactam, Hexamethylendiamin und Terephthalsäure sowie aus Tetramethylendiamin und Adipinsäure auf. Aber auch bei Polyamiden aus Hexamethylendiamin und Adipinsäure zeigen sich, speziell beim Zusatz von Al-Stearat, diese Nachteile.

Die Verwendung von Stearinsäure, Stearylstearat, Pentaerytrithester, Diglycolester von langkettigen Fettsäuren, Palmitinsäure, Behensäure und Derivaten hiervon als Schmiermittel ist ebenfalls bekannt. Diese Verbindungen weisen ebenfalls die oben genannten Nachteile auf.

Als Schmiermittel, die nicht auf Derivaten langkettiger Fettsäuren basieren sind beispielsweise Polytetrafluorethylen, Molybdänsulfid und Graphit zu nennen. Nachteilig wirken sich hier insbesondere die dunkle Eigenfarbe sowie wirtschaftliche und gesundheitliche Gesichtspunkte aus.

Für die Formmassen aus Polyphenylenethern und Polyamiden besteht neben der bekannten Unverträglichkeit der einzelnen Polymermatrices zusätzlich das Problem, das höhere Verarbeitungstemperaturen gewählt werden müssen und die Fließfähigkeit der Mischungen nicht ausreichend ist. Insbesondere für große Formkörper mit langen und teilweise sehr geringen Fließwegen reicht die Fließfähigkeit der Mischungen nicht aus.

Bei den aus o.g. Schriften bekannten Zusätzen werden die mechanischen Eigenschaften (insbesondere die Zähigkeit) der Formkörper verschlechtert, da erst bei relativ langen Standzeiten der Schmelze eine leichtere Entformung erfolgt.

Zudem sind die Verarbeitungsparameter abhängig von den Herstellbedingungen und Zusammensetzungen der Mischungen, so daß eine schlechte Reproduzierbarkeit resultiert und eine ständige Anpassung der Verarbeitungsbedingungen notwendig ist.

Aufgabe der vorliegenden Erfindung war es daher, thermoplastische Formmassen auf der Basis von Polyamid zur Verfügung zu stellen, die die vorstehend geschilderten Nachteile nicht aufweisen und die sich durch gute Fließfähigkeit und erhöhte Verarbeitungsstabilität auszeichnen.

Diese Aufgabe wird erfindungsgemäß durch die eingangs definierten thermoplastischen Formmassen gelöst. Bevorzugte Massen dieser Art sind den Unteransprüchen zu entnehmen.

Weiterhin wurden Verfahren zur Herstellung dieser thermoplastischen Formmassen, deren Verwendung zur Herstellung von Fasern, Folien und Formkörpern sowie die hierbei erhältlichen Formkörper gefunden.

Als Komponente A) enthalten die erfindungsgemäßen thermoplastischen Formmassen 96 bis 99,9 Gew.-%, vorzugsweise 99 bis 99,7 Gew.-% mindestens eines Polyamids.

Es können sowohl thermoplastische teilkristalline als auch amorphe Polyamide eingesetzt werden. Bevorzugt sind Polyamide mit einem Schmelzpunkt von mehr als 250 °C, insbesondere von mehr als 275 °C.

Als Komponente A) eignen sich besonders teilaromatische Copolyamide, die im wesentlichen aufgebaut sind aus

$A_1$) 20 - 90 Gew.-% Einheiten, die sich von Terephthalsäure und Hexamethylendiamin ableiten,
$A_2$) 0 - 50 Gew.-% Einheiten, die sich von ε-Caprolactam ableiten und
$A_3$) 0 - 80 Gew.-% Einheiten, die sich von Adipinsäure und Hexamethylendiamin ableiten,
$A_4$) 0 - 40 Gew.-% weiteren polyamidbildenden Monomeren,

wobei der Anteil der Komponente ($A_2$) oder ($A_3$) oder ($A_4$) oder deren Mischungen mindestens 10 Gew.-% beträgt.

Die Komponente $A_1$) enthält 20 - 90 Gew.-% Einheiten, die sich von Terephthalsäure und Hexamethylendiamin ableiten.

Neben den Einheiten, die sich von Terephthalsäure und Hexamethylendiamin ableiten, enthalten die Copolyamide Einheiten, die sich von ε-Caprolactam ableiten und/oder Einheiten, die sich von Adipinsäure und Hexamethylendiamin und/oder Einheiten, die sich von weiteren polyamidbildenden Monomeren ableiten.

Der Anteil an Einheiten, die sich von ε-Caprolactam ableiten, beträgt maximal 50 Gew.-%, vorzugsweise 20 bis 50 Gew.-%, insbesondere 25 bis 40 Gew.-%, während der Anteil an Einheiten die sich von Adipinsäure und Hexamethylendiamin ableiten, bis zu 80 Gew.-%, vorzugsweise 30 bis 75 Gew.-% und insbesondere 35 bis 60 Gew.-% beträgt.

Die Copolyamide können auch sowohl Einheiten von ε-Caprolactam als auch Einheiten von Adipinsäure und Hexamethylendiamin enthalten; in diesem Fall ist es von Vorteil, wenn der Anteil an Einheiten, die frei von aromatischen Gruppen sind, mindestens 10 Gew.-% beträgt, vorzugsweise mindestens 20 Gew.-%. Das Verhältnis der Einheiten, die sich von ε-Caprolactam und von Adipinsäure und Hexamethylendiamin ableiten, unterliegt dabei keiner besonderen Beschränkung.

Bevorzugt werden Copolyamide, deren Zusammensetzung im Dreistoffdiagramm innerhalb des durch Eckpunkte $X_1$ bis $X_5$ festgelegten Fünfecks liegt, wobei die Punkte $X_1$ bis $X_5$ folgendermaßen definiert sind:

$X_1$ 40 Gew.-% Einheiten $A_1$)
60 Gew.-% Einheiten $A_3$)
$X_2$ 60 Gew.-% Einheiten $A_1$)
40 Gew.-% Einheiten $A_3$)
$X_3$ 80 Gew.-% Einheiten $A_1$)
5 Gew.-% Einheiten $A_2$)
15 Gew.-% Einheiten $A_3$)
$X_4$ 80 Gew.-% Einheiten $A_1$)
20 Gew.-% Einheiten $A_2$)
$X_5$ 50 Gew.-% Einheiten $A_1$)
50 Gew.-% Einheiten $A_2$)

In der Abbildung ist das durch diese Punkte festgelegte Fünfeck in einem Dreistoffdiagramm dargestellt.

Als besonders vorteilhaft für viele Anwendungszwecke haben sich Polyamide mit 50 bis 80, insbesondere 60 bis 75 Gew.-% Einheiten, die sich von Terephthalsäure und Hexamethylendiamin ableiten (Einheiten $A_1$) und 20 bis 50, vorzugsweise 25 bis 40 Gew.-% Einheiten, die sich von ε-Caprolactam ableiten (Einheiten $A_2$)) enthalten, erwiesen.

Neben den vorstehend beschriebenen Einheiten $A_1$) bis $A_3$) können die teilaromatischen Copolyamide in Mengen bis 40, vorzugsweise 10 - 30 Gew.-% und insbesondere 20 - 30 Gew.-% an weiteren polyamidbildenden Monomeren $A_4$) enthalten; wie sie von anderen Polyamiden bekannt sind.

Aromatische Dicarbonsäuren $A_4$) weisen 8 bis 16 Kohlenstoffatome auf. Geeignete aromatische Dicarbonsäuren sind beispielsweise Isophthalsäure, substituierte Terephthal- und Isophthalsäuren wie 3-t-Butylisophthalsäure, mehrkernige Dicarbonsäuren, z.B. 4,4'- und 3,3'-Diphenyldicarbonsäure, 4,4'- und 3,3'-Diphenylmethandicarbonsäure, 4,4'- und 3,3'-Diphenylsulfondicarbonsäure, 1,4- oder 2,6-Naphtalindicarbonsäure, Phenoxyterephthalsäure, wobei Isophtalsäure besonders bevorzugt sind.

Weitere polyamidbildende Monomere $A_4$) können sich von Dicarbonsäuren mit 4 bis 16 Kohlenstoffatomen und aliphatischen oder cycloaliphatischen Diaminen mit 4 bis 16 Kohlenstoffatomen sowie von Aminocarbonsäuren bzw. entsprechenden Lactamen mit 7 bis 12 Kohlenstoffatomen ableiten. Als geeignete Monomere dieser Typen seien hier nur Suberinsäure, Azelainsäure oder Sebacinsäure als Vertreter der aliphatischen Dicarbonsäuren, 1,4-Butandiamin, 1,5-Pentandiamin, Piperazin, 4,4'-Diaminodicyclohexylmethan, 2,2-(4,4'-Diaminodicyclohexyl)propan oder 3,3'-Dimethyl-4,4'-Diaminodicyclohexylmethan als Vertreter der Diamine und Capryllactam, Önanthlactam, ω-Aminoundecansäure und Laurinlactam als Vertreter von Lactamen bzw. Aminocarbonsäuren genannt.

Hierbei sind folgende Zusammensetzungen der Komponente (A) besonders bevorzugt:

$A_1$) 65 bis 85 Gew.-% Einheiten, die sich von Terephthalsäure und Hexamethylendiamin ableiten und
$A_4$) 15 bis 35 Gew.-% Einheiten, die sich von Isophthalsäure und Hexamethylendiamin ableiten

oder

$A_1$) 50 bis 70 Gew.-% Einheiten, die sich von Terephthalsäure und Hexamethylendiamin ableiten und
$A_3$) 10 bis 20 Gew.-% Einheiten, die sich von Adipinsäure und Hexamethylendiamin ableiten und
$A_4$) 20 bis 30 Gew.-% Einheiten, die sich von Isophthalsäure und Hexamethylendiamin ableiten

Enthält die Komponente ($A_4$) symmetrische Dicarbonsäuren, bei denen die Carboxylgruppen in para-Stellung stehen, so empfiehlt es sich, diese mit ($A_1$) und ($A_2$) oder ($A_1$) und ($A_3$) als ternäre Copolyamide aufzubauen, da andernfalls das Copolyamid einen zu hohen Schmelzpunkt aufweist und nur unter Zersetzung schmilzt, was nicht wünschenswert ist.

Weiterhin haben sich solche teilaromatischen Copolyamide als besonders vorteilhaft erwiesen, deren Triamingehalt weniger als 0,5, vorzugsweise weniger als 0,3 Gew.-% beträgt.

Nach den meisten bekannten Verfahren (vgl. US-A 4 603 166) hergestellte teilaromatische Copolyamide weisen Triamingehalte auf, die über 0,5 Gew.-% liegen, was zu einer Verschlechterung der Produktqualität und zu Problemen bei der kontinuierlichen Herstellung führt. Als Triamin, welches diese Probleme verursacht, ist insbesondere das Dihexamethylentriamin zu nennen, welches sich aus dem bei der Herstellung eingesetzten Hexamethylendiamin bildet.

Copolyamide mit niedrigem Triamingehalt weisen bei gleicher Lösungsviskosität niedrigere Schmelzviskositäten im Vergleich zu Produkten gleicher Zusammensetzung auf, die einen höheren Triamingehalt aufweisen. Dies verbessert sowohl die Verarbeitbarkeit als auch die Produkteigenschaften erheblich.

Die Schmelzpunkte der teilaromatischen Copolyamide liegen im Bereich von 270 °C bis 325 °C, bevorzugt von 280 bis 310 °C, wobei dieser hohe Schmelzpunkt auch mit einer hohen Glasübergangstemperatur von in der Regel mehr als 75, insbesondere mehr als 85 °C (im trockenen Zustand) verbunden ist.

Binäre Copolyamide auf der Basis von Terephthalsäure, Hexamethylendiamin und ε-Caprolactam weisen bei Gehalten von etwa 70 Gew.-% an Einheiten, die sich von Terephthalsäure und Hexamethylendiamin ableiten, Schmelzpunkte im Bereich von 300 °C und (im trockenen Zustand) eine Glasübergangstemperatur von mehr als 110 °C auf.

Binäre Copolyamide auf der Basis von Terephthalsäure, Adipinsäure und Hexamethylendiamin erreichen bereits bei niedrigeren Gehalten von etwa 55 Gew.-% Einheiten aus Terephthalsäure und Hexamethylendiamin (HMD) Schmelzpunkte von 300 °C und mehr, wobei die Glastemperatur nicht ganz so hoch liegt wie bei binären Copolyamiden, die anstelle von Adipinsäure bzw. Adipinsäure/HMD ε-Caprolactam enthalten.

Bei den teilaromatischen Copolyamiden sollen erfindungsgemäß solche verstanden werden, die einen Kristallinitätsgrad > 10 %, bevorzugt > 15 %, und insbesondere > 20 % aufweisen.

Der Kristallinitätsgrad ist ein Maß für den Anteil an kristallinen Fragmenten im Copolyamid und wird durch Röntgenbeugung bestimmt.

Die Herstellung der bevorzugten teilaromatischen Copolyamide mit niedrigem Triamingehalt kann nach den in den EP-A 129 195 und 129 196 beschriebenen Verfahren erfolgen.

Gemäß diesen Verfahren wird eine wäßrige Lösung der Monomeren, d.h. in diesem Fall der Monomeren, die die Einheiten $A_1$) bis $A_3$) bilden, unter erhöhtem Druck unter gleichzeitiger Verdampfung von Wasser und Bildung eines Präpolymeren auf eine Temperatur von 250 bis 300 °C erhitzt, anschließend werden Präpolymere und Dampf kontinuierlich getrennt, der Dampf rektifiziert und die mitgeführten Diamine zurückgeleitet. Schließlich wird das Präpolymer in eine Polykondensationszone geleitet und unter einem Überdruck von 1 bis 10 bar und einer Temperatur von 250 bis 300 °C polykondensiert. Wesentlich ist bei

dem Verfahren, daß die wäßrige Salzlösung unter einem Überdruck von 1 bis 10 bar innerhalb einer Verweilzeit von weniger als 60 Sekunden erhitzt wird, wobei bei Austritt aus der Verdampferzone der Umsetzungsgrad vorteilhaft mindestens 93 % und der Wassergehalt des Präpolymeren höchstens 7 Gew.-% beträgt.

Durch diese kurzen Verweilzeiten wird die Bildung von Triaminen weitgehend verhindert.

Die verwendeten wäßrigen Lösungen haben in der Regel einen Monomergehalt von 30 bis 70 Gew.-%, insbesondere von 40 bis 65 Gew.-%.

Die wäßrige Salzlösung wird vorteilhaft mit einer Temperatur von 50 bis 100 °C kontinuierlich in eine Verdampferzone geleitet, wo die wäßrige Salzlösung unter einem Überdruck von 1 bis 10, vorzugsweise von 2 bis 6 bar auf eine Temperatur von 250 bis 330 °C erhitzt wird. Es versteht sich, daß die angewandte Temperatur über dem Schmelzpunkt des jeweils herzustellenden Polyamids liegt.

Wie bereits erwähnt, ist es wesentlich, daß die Verweilzeit in der Verdampferzone maximal 60 Sekunden, vorzugsweise 10 bis 55 Sekunden und insbesondere 10 bis 40 Sekunden beträgt.

Der Umsatz beim Austritt aus der Verdampferzone beträgt mindestens 93, vorzugsweise 95 bis 98 % und der Wassergehalt liegt vorzugsweise im Bereich von 2 bis 5, insbesondere 1 bis 3 Gew.-%.

Ferner hat es sich als vorteilhaft erwiesen, das Gemisch aus Präpolymeren und Dampf vor der Trennung der Phasen unmittelbar nach der Verdampferzone durch eine röhrenförmige Stoffaustauschzone, die mit Einbauten versehen ist, zu leiten. Hierbei hält man die in der Verdampferzone angewandten Temperaturen und Druckbedingungen ein. Die Einbauten, z.B. Füllkörper wie Raschigringe, Metallringe oder insbesondere Füllkörper aus Drahtnetz, bewirken eine große Oberfläche. Hierdurch werden die Phasen, d.h. Präpolymeres und Dampf, innig in Berührung gebracht. Dies bewirkt, daß die Menge des mit Wasserdampf freigesetzten Diamins erheblich vermindert wird. In der Regel hält man in der Stoffaustauschzone eine Verweilzeit von 1 bis 15 Minuten ein. Die Stoffaustauschzone ist vorteilhaft als Röhrenbündel ausgebildet.

Das aus der Verdampferzone bzw. Stoffaustauschzone austretende zweiphasige Gemisch aus Dampf und Präpolymeren wird getrennt. Die Trennung erfolgt in der Regel von selbst aufgrund der physikalischen Unterschiede in einem Gefäß, wobei der untere Teil des Gefäßes vorteilhaft als Polymerisationszone ausgebildet ist. Die freiwerdenden Brüden bestehen im wesentlichen aus Wasserdampf und Diaminen, die bei dem Verdampfen des Wassers freigesetzt wurden. Diese Brüden werden in eine Kolonne geleitet und rektifiziert. Geeignete Kolonnen sind beispielsweise Füllkörperkolonnen, Glockenbodenkolonnen oder Siebbodenkolonnen mit 5 bis 15 theoretischen Böden. Die Kolonne wird zweckmäßig unter den identischen Druckbedingungen wie die Verdampferzone betrieben. Die in den Brüden enthaltenen Diamine werden hierbei abgetrennt und wieder der Verdampferzone zugeführt. Es ist auch möglich, die Diamine der nachfolgenden Polymerisationszone zuzuführen. Der anfallende rektifizierte Wasserdampf wird am Kopf der Kolonne entnommen.

Das erhaltene Präpolymere, das entsprechend seinem Umsetzungsgrad im wesentlichen aus niedermolekularem Polyamid und gegebenenfalls restlichen Mengen an nicht umgesetzten Salzen besteht und in der Regel eine relative Viskosität von 1,2 bis 1,7 hat, wird in eine Polymerisationszone geleitet. In der Polymerisationszone wird die anfallende Schmelze bei einer Temperatur von 250 bis 330 °C, insbesondere 270 bis 310 °C, und unter einem Überdruck von 1 bis 10 bar, insbesondere 2 bis 6 bar, polykondensiert. Vorteilhaft werden die hierbei freiwerdenden Dämpfe zusammen mit den obengenannten Brüden in der Kolonne rektifiziert, vorzugsweise hält man in der Polykondensationszone eine Verweilzeit von 5 bis 30 Minuten ein. Das so erhaltene Polyamid, das in der Regel eine relative Viskosität von 1,2 bis 2,3 hat, wird kontinuierlich aus der Kondensationszone entnommen.

Nach einer bevorzugten Arbeitsweise leitet man das so erhaltene Polyamid schmelzflüssig durch eine Austragszone unter gleichzeitiger Entfernung des in der Schmelze enthaltenen Restwassers. Geeignete Austragszonen sind beispielsweise Entgasungsextruder. Die so vom Wasser befreite Schmelze wird dann in Stränge gegossen und granuliert. Das erhaltene Granulat wird vorteilhaft in fester Phase mittels überhitztem Wasserdampf bei einer Temperatur unterhalb des Schmelzpunktes, z.B. von 170 bis 240 °C, bis zur gewünschten Viskosität kondensiert. Vorteilhaft verwendet man hierfür den am Kopf der Kolonne anfallenden Wasserdampf.

Die relative Viskosität, gemessen in 1 Gew.-% Lösung in 96 Gew.-% $H_2SO_4$ bei 23 °C, liegt nach der Festphasennachkondensation im allgemeinen im Bereich von 2,2 bis 5,0, vorzugsweise von 2,3 bis 4,5.

Nach einer anderen bevorzugten Arbeitsweise wird die aus der Polykondensationszone ausgetragene Polyamidschmelze in eine weitere Polykondensationszone geleitet und dort unter fortlaufender Ausbildung neuer Oberflächen bei einer Temperatur von 285 bis 310 °C vorteilhaft unter vermindertem Druck, z.B. von 1 bis 500 mbar, bis zur gewünschten Viskosität kondensiert. Geeignete Vorrichtungen sind als Finisher bekannt.

Ein weiteres Verfahren, welches dem vorstehend beschriebenen ähnelt, ist in der EP-A 129 196

beschrieben; wegen weiterer Einzelheiten sei auf die Schrift verwiesen.

Weitere geeignete Polyamide können z.B. durch Kondensation äquimolarer Mengen einer gesättigten Dicarbonsäure mit 4 bis 12 Kohlenstoffatomen mit einem Diamin, welches 4 bis 14 Kohlenstoffatome aufweist oder durch Kondensation von ω-Aminocarbonsäuren oder Polyaddition von Lactamen hergestellt werden.

Beispiele für Polyamide sind Polyhexamethylenadipinsäureamid, Polyhexamethylenazelainsäureamid, Polyhexamethylensebacinsäureamid, Polyhexamethylendodecandisäureamid, Polytetramethylenadipinsäureamid und die durch Ringöffnung von Lactamen erhaltenen Polyamide wie Polycaprolactam und Polylaurinsäurelactam.

In der Regel sind diese teilkristallinen Polyamide linear.

Besonders bevorzugt sind Polytetramethylenadipinsäureamid und Polyhexamethylenadipinsäureamid sowie Copolyamide aus Terephthalsäure, Hexamethylendiamin und ε-Caprolactam, mit einem Gehalt an ε-Caprolactam von weniger als 50 Gew.-%.

Diese Polyamide weisen im allgemeinen eine relative Viskosität von 2,0 bis 5 auf, bestimmt in einer 1 vol.-%igen Lösung von 96 gew.-%iger Schwefelsäure bei 23 °C, was einem Molekulargewicht (Gewichtsmittelwert) von etwa $10^4$ bis $5 \cdot 10^4$ entspricht.

Polyamide mit einer relativen Viskosität von 2,4 bis 4,5, insbesondere von 2,5 bis 3,5, werden bevorzugt verwendet.

Als Komponente A) können auch Mischungen verschiedener Polyamide eingesetzt werden.

Die erfindungsgemäßen thermoplastischen Formmassen enthalten als Komponente B) 0,1 bis 4 Gew.-%, bevorzugt 0,3 bis 1 Gew.-% an Dialkylketonen der allgemeinen Formel I

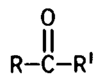 I

in der R und R' Alkylgruppen mit 10 bis 30 C-Atomen, bevorzugt 16 bis 22 C-Atomen und insbesondere mit 18, 20 oder 22 C-Atomen bedeuten. Die Reste R und R' können gleich oder verschieden sein, jedoch sind Dialkylketone mit gleichen Resten bevorzugt, insbesondere Distearylketon und Dibehenylketon sowie Dipalmitinoylketon und Dioleoylketon. Es können auch Mischungen verschiedener Dialkylketone eingesetzt werden.

Derartige Dialkylketone sowie Verfahren zu ihrer Herstellung sind an sich bekannt. Sie können z.B. durch trockene Destillation von Ca- oder Mg-Salzen der entsprechenden Carbonsäuren hergestellt werden. Für nähere Einzelheiten sei auf die Literatur (A.G. Dobson and H.H. Hatt, Org. Synth. 33 (1953), S. 84 ff sowie Curtis, Dobson and Hatt, J. Soc. Chem. Ind., 66 (1947), S. 402 ff.) verwiesen.

Als Komponente C) enthalten die erfindungsgemäßen thermoplastischen Formmassen 0 bis 40, vorzugsweise 10 bis 25 Gew.-%, bezogen auf die Summe der Komponenten A) + B), eines kautschukelastischen Polymerisats.

Im allgemeinen handelt es sich dabei um Copolymerisate, die bevorzugt aus mindestens zwei der folgenden Monomeren als Hauptkomponenten aufgebaut sind: Ethylen, Propylen, Isobuten, Isopren, Chloropren, Vinylacetat, Styrol, Acrylnitril und Acryl- und Methacrylsäureestern mit 1 bis 18 C-Atomen in der Alkoholkomponente.

Kautschuke dieser Art sind z.B. im Houben-Weyl, Methoden der organischen Chemie, Bd. 14/1 (Thieme-Verlag, Stuttgart, 1961), Seiten 392 bis 406 und in der Monographie von C.B. Bucknall, "Toughened Plastic" (Applied Science Publishers, London, 1977) beschrieben.

Bevorzugte Arten von solchen Elastomeren sind die sog. Ethylen-Propylen (EPM) bzw. Ethylen-Propylen-Dien-(EPDM)-Kautschuke, die vorzugsweise ein Verhältnis von Ethyleneinheiten zu Propyleneinheiten im Bereich von 40:60 bis 90:10 aufweisen.

Die Mooney-Viskositäten (MLI + 4/100 °C) solcher unvernetzten EPM bzw. EPDM-Kautschuke (Gelgehalte im allgemeinen unter 1 Gew.%) liegen bevorzugt im Bereich von 25 bis 100, insbesondere von 35 bis 90 (gemessen am großen Rotor nach 4 Minuten Laufzeit bei 100 °C nach DIN 53 523).

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren, nichtkonjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen,

2-Methallyl-5-norbornen, 2-Isopropenyl-5-norbornen und Tricyclodiene wie 3-Methyl-tricyclo(5.2.1.0.2.6)-3,8-decadien oder deren Mischungen genannt. Bevorzugt werden Hexa-1,5-dien-5-Ethyliden-norbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

EPM- bzw. EPDM-Kautschuke können vorzugsweise auch mit reaktiven Carbonsäuren oder deren Derivaten gepfropft sein. Hier seien z.B. Acrylsäure, Methacrylsäure und deren Derivate sowie Maleinsäureanhydrid genannt.

Eine weitere Gruppe bevorzugter Kautschuke sind Copolymere des Ethylens mit Acrylsäure und/oder Methacrylsäure und/oder den Estern dieser Säuren. Zusätzlich können die Kautschuke noch Dicarbonsäuren wie Maleinsäure und Fumarsäure oder Derivate dieser Säuren, z.B. Ester und Anhydride, und/oder Epoxy-Gruppen enthaltende Monomere enthalten. Diese Dicarbonsäurederivate bzw. Epoxygruppen enthaltende Monomere werden vorzugsweise durch Zugabe von Dicarbonsäure- bzw. Epoxygruppen enthaltenden Monomeren der allgemeinen Formeln II oder III oder IV oder V zum Monomerengemisch in den Kautschuk eingebaut

$$R_1C(COOR_2)=C(COOR_3)R_4 \qquad II$$

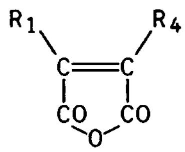

III

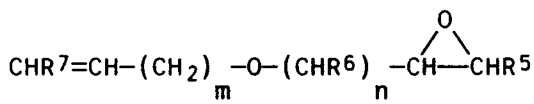

IV

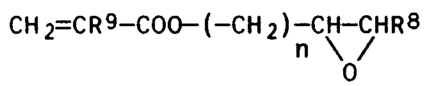

V

wobei $R^1$ bis $R^9$ Wasserstoff oder Alkylgruppen mit 1 bis 6 C-Atomen darstellen und m eine ganze Zahl von 0 bis 20, n eine ganze Zahl von 0 bis 10 und p eine ganze Zahl von 0 bis 5 ist.

Vorzugsweise bedeuten die Reste $R^1$ bis $R^7$ Wasserstoff, wobei m für 0 oder 1 und n für 1 steht. Die entsprechenden Verbindungen sind Maleinsäure, Fumarsäure, Maleinsäureanhydrid, Allylglycidylether und Vinylglycidylether.

Bevorzugte Verbindungen der Formeln II, III und V sind Maleinsäure, Maleinsäureanhydrid und Epoxygruppen-enthaltende Ester der Acrylsäure und/oder Methacrylsäure, wobei Glycidylacrylat, Glycidylmethacrylat und die Ester mit tertiären Alkoholen, wie t-Butylacrylat besonders bevorzugt werden. Letztere weisen zwar keine freien Carboxylgruppen auf, kommen in ihrem Verhalten aber den freien Säuren nahe und werden deshalb als Monomere mit latenten Carboxylgruppen bezeichnet.

Der Ethylengehalt der Copolymeren liegt im allgemeinen im Bereich von 50 bis 98 Gew.-%, und der Anteil an Methacrylsäureestern zwischen 2 und 50 Gew.-%. Vorteilhaft bestehen die Copolymeren aus 50 bis 98 Gew.-% Ethylen, 0,1 bis 20 Gew.-% Epoxygruppen enthaltenden Monomeren und/oder Methacrylsäure und/oder Säureanhydridgruppen enthaltenden Monomeren sowie der restlichen Menge an Methacrylsäureestern.

Besonders bevorzugt sind Copolymerisate aus

| | |
|---|---|
| 50 bis 98,9, | insbesondere 60 bis 95 Gew.-% Ethylen, |
| 0,1 bis 40, | insbesondere 0,3 bis 20 Gew.-% Glycidylacrylat und/oder Glycidylmethacrylat, Acrylsäure und/oder Maleinsäureanhydrid, und |
| 1 bis 45, | insbesondere 10 bis 35 Gew.-% n-Butylacrylat und/oder 2-Ethylhexylacrylat. |

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Der Schmelzindex der Ethylencopolymeren liegt im allgemeinen im Bereich von 1 bis 80 g/10 min (gemessen bei 190 ° C und 2,16 kg Belastung).

Bevorzugte Elastomere C) sind Emulsionspolymerisate, deren Herstellung z.B. in Houben-Weyl, Methoden der organischen Chemie, Band XII. I (1961) sowie bei Blackley in der Monographie "Emulsion Polymerization" beschrieben wird. Die verwendbaren Emulgatoren und Katalystoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflußt.

Nur stellvertretend seien hier als Monomere für die Herstellung des Kautschukteils der Elastomeren Acrylate wie z.B. n-Butylacrylat und 2-Ethylhexylacrylat, entsprechende Methacrylate und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0 ° C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20 ° C) am Aufbau des Elastomeren beteiligt, so werden diese im allgemeinen durch Polymerisation von Styrol, Acrylnitril, Methacrylnitril, $\alpha$-Methylstyrol$_1$ p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Carboxyl-, latente Carboxyl-, Amino- oder Amidgruppen sowie funktionelle Gruppen, die durch Mitverwendung von Monomeren der allgemeinen Formel

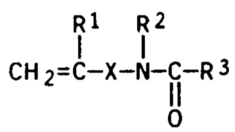

eingeführt werden können,
wobei die Substituenten folgende Bedeutung haben können:

- $R^1$ Wasserstoff oder eine $C_1$- bis $C_4$-Alkylgruppe,
- $R^2$ Wasserstoff, eine $C_1$- bis $C_8$-Alkylgruppe oder eine Arylgruppe, insbesondere Phenyl,
- $R^3$ Wasserstoff, eine $C_1$- bis $C_{10}$-Alkyl-, eine $C_6$-$C_{12}$-Arylgruppe oder -$OR^4$,
- $R^4$ eine $C_1$- bis $C_8$-Alkyl- oder $C_6$- bis $C_{12}$-Arylgruppe, die gegebenenfalls mit O- oder N-haltigen Gruppen substituiert sein können,
- X eine chemische Bindung, eine $C_1$- bis $C_{10}$-Alkylen- oder $C_6$- bis $C_{12}$-Arylengruppe oder

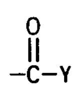

- Y O-Z- oder NH-Z und
- Z eine $C_1$- bis $C_{10}$-Alkylen- oder $C_6$- bis $C_{12}$-Arylengruppe.

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)ethylmethacrylat, (N,N-Dimethylamino)ethylacrylat, (N,N-Dimethylamino)methylacrylat und (N,N-Diethylamino)ethylacrylat genannt.

Weiterhin können die Teilchen der Kautschukphase auch vernetzt sein. Als Vernetzer wirkende Monomere sind beispielsweise Divinylbenzol, Diallylphthalat und Dihydrodicyclopentodienylacrylat sowie die in der EP-A 50 265 beschriebenen Verbindungen zu nennen.

Ferner können auch sogenannten pfropfvernetzende Monomere (graft-linking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im allgemeinen beträgt der Anteil dieser vernetzenden Monomeren an der Komponente C) bis zu 5 Gew.-%, vorzugsweise nicht mehr als 3 Gew.-%, bezogen auf C).

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Typ | Monomere für den Kern | Monomere für die Hülle |
|---|---|---|
| A | Isopren, n-Butylacrylat, Ethylhexylacrylat oder deren Mischungen | Styrol, Acrylnitril, Methylmethacrylat |
| B | wie A aber unter Mitverwendung von Vernetzern | wie A |
| C | wie A oder B | n-Butylacrylat, Ethylacrylat, Methylacrylat, Isopren, Ethylhexylacrylat |
| D | wie A oder B | wie A oder C aber unter Mitverwendung von Monomeren mit reaktiven Gruppen wie hierin beschrieben |
| E | Styrol, Acrylnitril, Methylmethacrylat oder deren Mischungen | erste Hülle aus Monomeren wie unter A und B für den Kern beschrieben zweite Hülle wie unter A oder C für die Hülle beschrieben |

Anstelle von Pfropfpolymerisaten mit einem mehrschaligen Aufbau können auch homogene, d.h. einschalige Elastomere aus Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Beispiele für bevorzugte Emulsionspolymerisate sind n-Butylacrylat/(Meth)acrylsäure-Copolymere, n-Butylacrylat/Glycidylacrylat- oder n-Butylacrylat/Glycidylmethacrylat-Copolymere, Pfropfpolymerisate mit einem inneren Kern aus n-Butylacrylat und einer äußeren Hülle aus den vorstehend genannten Copolymeren und Copolymere von Ethylen mit Comonomeren, die reaktive Gruppen liefern.

Die beschriebenen Elastomere C) können auch nach anderen üblichen Verfahren, z.B. durch Suspensionspolymerisation, hergestellt werden.

Selbstverständlich können auch Mischungen der vorstehend aufgeführten Kautschuktypen eingesetzt werden können.

Bevorzugt werden Kautschuke verwendet, die kein Butadien enthalten.

Als Kautschuke, die die Zähigkeit von Polyphenylenethern erhöhen, seien z.B. folgende genannt: Polyoctenylene, Pfropfkautschuke mit einem vernetzten, elastomeren Kern, der beispielsweise von Butadien, Isopren oder Alkylacrylaten abgeleitet ist und einer Pfropfhülle aus Polystyrol, weiterhin Copolymere aus Ethylen und Acrylaten bzw. Methacrylaten sowie die sogenannten Ethylen-Propylen (EP)- und Ethylen-Propylen-Dien (EPDM)-Kautschuke, ferner die mit Styrol gepfropften EP- bzw. EPDM-Kautschuke.

Blockcopolymere mit bis zu sechs, vorzugsweise mit bis zu vier gleichen oder unterschiedlichen Blöcken, die sowohl linear als auch sternförmig (sogenannte Radialblockcopolymere) verbunden sein können, haben sich als besonders geeignet erwiesen.

Bevorzugt werden Blockkautschuke, bei denen mindestens ein Block, vorzugsweise ein Endblock, aus vinylaromatischen Monomeren wie Styrol, $\alpha$-Methylstyrol, Vinyltoluol, Vinyl- oder Isopropenylnaphthalin aufgebaut ist. Polystyrol als vinylaromatischer Block ist besonders bevorzugt.

Üblicherweise enthalten diese bevorzugten Blockcopolymere weiterhin einen elastomeren Block, der durch eine Glastemperatur von weniger als 0 °C, vorzugsweise von weniger als -30 °C charakterisiert ist. Dieser Block leitet sich z.B. von konjugierten Dienen wie Butadien, Isopren, 1,3-Pentadien oder 2,3-Dimethylbutadien ab. Um Produkte mit guter Dauerwärmeformbeständigkeit zu erhalten, hat es sich als besonders geeignet erwiesen, wenn mindestens 50 %, vorzugsweise mindestens 80 % und insbesondere mindestens 90 % der Doppelbindungen hydriert werden.

Die Übergänge zwischen den einzelnen Blöcken können sowohl scharf als auch verschmiert sein.

Vorzugsweise handelt es sich bei den Kautschuken, die die Zähigkeit von Polyphenylenethern erhöhen, um lineare Blockcopolymere der allgemeinen Struktur A-B, A-B-A' oder A-B-A'-B', wobei A und A' den vinylaromatischen Block, vorzugsweise Polystyrol, darstellen und B und B' den elastomeren Block, der vorzugsweise aus Butadien und/oder Isopren - wobei sowohl Butadien als auch Isopren hydriert sein können - aufgebaut ist.

Mischungen aus Blockcopolymeren verschiedener Strukturen, z.B. Mischungen aus Zwei- und Dreiblockcopolymeren oder aus hydrierten und unhydrierten Blockcopolymeren, können ebenfalls eingesetzt werden.

Derart schlagzäh modifizierende Polymere sind an sich bekannt und in der Literatur beschrieben. Nur beispielsweise sei hier auf US-A 4 085 163, US-A 4 041 103, US-A 3 149 182, US-A 3 231 635 und US-A 3 462 162 verwiesen.

Auch im Handel sind entsprechende Produkte erhältlich, z.B. ein Polyoctylen der Bezeichnung Vestenamer® (Hüls AG), sowie eine Vielzahl geeigneter Blockcopolymere mit mindestens einem vinylaromatischen und einem elastomeren Block. Beispielhaft seien die Cariflex®-TR-Typen (Shell), die Kraton®- G-Typen (Shell), die Finaprene®-Typen (Fina) und die Europrene®-SOL-TR-Typen (Enichem) genannt.

Die erfindungsgemäßen Formmassen können 0 bis 60 Gew.-%, bevorzugt 15 bis 35 Gew.-%, bezogen auf die Summe der Komponenten A) und B), eines faser- oder teilchenförmigen Zusatzstoffes oder Mischungen solcher Füllstoffe enthalten. Enthalten die erfindungsgemäßen Formmassen die Komponente E, so kann insbesondere der Gehalt an Glasfasern bis zu 85 Gew.-% betragen.

Als faserförmige Füllstoffe seien hier nur beispielsweise Glasfasern, Kohlenstoff-Fasern, Aramid-Fasern, Kaliumtitanatfasern und faserförmige Silikate wie Wollastonit genannt.

Bei der Verwendung von Glasfasern können diese zur besseren Verträglichkeit mit dem Polyamid mit einer Schlichte und einem Haftvermittler ausgerüstet sein.

Im allgemeinen haben die verwendeten Glasfasern einen Durchmesser im Bereich von 6 bis 20 $\mu$m. Die Einarbeitung kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,08

bis 5 mm.

Als teilchenförmige Füllstoffe seien hier nur stellvertretend Glaskugeln, teilchenförmiger Wollastonit, Quarzmehl, Bornitrid, Kaolin, Calciumcarbonat, Glimmer, Magnesiumcarbonat (Kreide) und Titandioxid genannt, wovon Wollastonit, Titandioxid und Kaolin im allgemeinen bevorzugt werden.

Neben den wesentlichen Komponenten können die erfindungsgemäßen Formmassen übliche Zusatzstoffe und Verarbeitungshilfsmittel enthalten. Deren Anteil beträgt im allgemeinen bis zu 20, vorzugsweise bis zu 10 Gew.-%, bezogen auf das Gesamtgewicht der Komponenten A) bis D).

Übliche Zusatzstoffe sind beispielsweise Stabilisatoren und Oxidationsverzögerer, Flammschutzmittel, Mittel gegen Wärmezersetzung und Zersetzung durch ultraviolettes Licht, Färbemittel, Farbstoffe, Pigmente und Weichmacher.

Oxidationsverzögerer und Wärmestabilisatoren, die den thermoplastischen Massen gemäß der Erfindung zugesetzt werden können, sind z.B. Halogenide von Metallen der Gruppe I des periodischen Systems, z.B. Natrium-, Kalium-, Lithium-Halogenide, ggf. in Verbindung mit Kupfer-(I)-Halogeniden, z.B. Chloriden, Bromiden oder Iodiden. Ferner sind sterisch gehinderte Phenole, Hydrochinone, substituierte Vertreter dieser Gruppe und Mischungen derselben, vorzugsweise in Konzentrationen bis zu 1 Gew.-%, bezogen auf das Gewicht der Mischung, einsetzbar.

Beispiele für UV-Stabilisatoren sind sterisch gehinderte Amine, verschiedene substituierte Resorcine, Salicylate, Benzotriazole und Benzophenone, die im allgemeinen in Mengen bis zu 2 Gew.-% eingesetzt werden.

Die erfindungsgemäßen Formmassen können als Komponente E) 0 bis 120, bevorzugt 40 bis 100 und insbesondere 50 bis 90 Gew.-%, bezogen auf die Summe der Komponenten A) und B), eines modifizierten Polyphenylenethers enthalten.

Die Polyphenylenether weisen im allgemeinen ein Molekulargewicht (Gewichtsmittelwert) im Bereich von 10 000 bis 80 000, vorzugsweise von 20 000 bis 60 000 auf.

Dies entspricht einer reduzierten spezifischen Viskosität $\eta_{red}$ von 0,2 bis 0,9 dl/g, vorzugsweise von 0,35 bis 0,8 und insbesondere 0,45 bis 0,6, gemessen in einer 1 gew.%igen Lösung in Chloroform bei 25 °C nach DIN 53 726.

Die unmodifizierten Polyphenylenether sind an sich bekannt und werden vorzugsweise durch oxidative Kupplung von in o-Position disubstituierten Phenolen hergestellt.

Als Beispiele für Substituenten sind Halogenatome wie Chlor oder Brom und Alkylreste mit 1 bis 4 Kohlenstoffatomen, die vorzugsweise kein α-ständiges tertiäres Wasserstoffatom aufweisen, z.B. Methyl-, Ethyl-, Propyl- oder Butylreste zu nennen. Die Alkylreste können wiederum durch Halogenatome wie Chlor oder Brom oder durch eine Hydroxylgruppe substituiert sein. Weitere Beispiele möglicher Substituenten sind Alkoxireste, vorzugsweise mit bis zu 4 Kohlenstoffatomen oder gegebenenfalls durch Halogenatome und/oder Alkylgruppen substituierte Phenylreste. Ebenfalls geeignet sind Copolymere verschiedener Phenole wie z.B. Copolymere von 2,6-Dimethylphenol und 2,3,6-Trimethylphenol. Selbstverständlich können auch Gemische verschiedener Polyphenylenether eingesetzt werden.

Die als Komponente E) verwendeten Polyphenylenether können gegebenenfalls verfahrensbedingte Fehlstellen enthalten, die beispielsweise bei White et al., Macromolecules 23, 1318-1329 (1990) beschrieben sind.

Vorzugsweise werden solche Polyphenylenether eingesetzt, die mit vinylaromatischen Polymeren verträglich, d.h. ganz oder weitestgehend in diesen Polymeren löslich sind (vgl. A. Noshay, Block Copolymers, S. 8 bis 10, Academic Press, 1977 und O. Olabisi, Polymer-Polymer Miscibility, 1979, S. 117 bis 189).

Beispiele für Polyphenylenether sind Poly(2,6-dilauryl-1,4-phenylen)ether,Poly(2,6-diphenyl-1,4-phenylen)ether, Poly(2,6-dimethoxi-1,4-phenylen)ether, Poly(2,6-diethoxi-1,4-polyphenylen)ether, Poly(2-methoxi-6-ethoxi-1,4-phenylen)ether, Poly(2-ethyl-6-stearyloxi-1,4-phenylen)ether, Poly(2,6-dichlor-1,4-phenylen)ether, Poly(2-methyl-6-phenylen-1,4-phenylenether, Poly(2,6-dibenzyl-1,4-phenylen)ether, Poly(2-ethoxi-1,4-phenylen)ether, Poly(2-chlor-1,4-phenylen)ether, Poly(2,5-dibrom-1,4-phenylen)ether. Bevorzugt werden Polyphenylenether eingesetzt, bei denen die Substituenten Alkylreste mit 1 bis 4 Kohlenstoffatomen sind, wie Poly-(2,6-dimethyl-1,4-phenylen)ether, Poly(2,6-diethyl-1,4-phenylen)ether, Poly(2-methyl-6-ethyl-1,4-phenylen)-ether, Poly(2-methyl-6-propyl-1,4-phenylen)ether, Poly(2,6-dipropyl-1,4-phenylen)ether und Poly(2-ethyl-6-propyl-1,4-phenylen)ether.

Weiterhin sind Pfropfcopolymere aus Polyphenylenether und vinylaromatischen Polymeren wie Styrol, α-Methylstyrol, Vinyltoluol und Chlorstyrol geeignet.

Funktionalisierte oder modifizierte Polyphenylenether sind an sich bekannt, z.B. aus WO-A 86/02086, WO-A 87/00540, EP-A-222 246, EP-A-223 116 und EP-A-254 048.

Üblicherweise wird ein unmodifizierter Polyphenylenether durch Einbau mindestens einer Carbonyl-,

Carbonsäure-, Säureanhydrid-, Säureamid-, Säureimid, Carbonsäureester-, Carboxylat-, Amino-, Hydroxyl-, Epoxi-, Oxazolin-, Urethan-, Harnstoff-, Lactam- oder Halogenbenzylgruppe modifiziert, so daß eine hinreichende Verträglichkeit mit dem Polyamid (Komponente A) gewährleistet ist.

Die Modifizierung wird im allgemeinen durch Umsetzung eines unmodifizierten Polyphenylenethers $e_1$) mit einem Modifiziermittel, das mindestens eine der oben genannten Gruppen und mindestens eine C-C-Doppel- oder C-C-Dreifachbindung enthält, in Lösung (WO-A 86/2086), in wäßriger Dispersion, in einem Gasphasenverfahren (EP-A-25 200) oder in der Schmelze gegebenenfalls in Gegenwart von geeigneten vinylaromatischen Polymeren oder Schlagzähmodifiern durchgeführt, wobei wahlweise Radikalstarter zugegen sein können.

Geeignete Modifiziermittel ($e_3$) sind beispielsweise Maleinsäure, Methylmaleinsäure, Itaconsäure, Tetrahydrophthalsäure, deren Anhydride und Imide, Fumarsäure, die Mono- und Diester dieser Säuren, z.B. von $C_1$- und $C_2$- bis $C_8$-Alkanolen ($e_{31}$), die Mono- oder Diamide dieser Säuren wie N-Phenylmaleinimid (Monomere $e_{32}$), Maleinhydrazid. Weiterhin seien beispielsweise N-Vinylpyrrolidon und (Meth)-acryloylcaprolactam ($e_{33}$)) genannt. Eine andere Gruppe von Modifiziermitteln umfaßt beispielsweise das Säurechlorid des Trimelithsäureanhydrids, Benzol-1,2-dicarbonsäureanhydrid-4-carbonsäure-essigsäureanhydrid, Chlorethanoylsuccinaldehyd, Chlorformylsuccinaldehyd, Zitronensäure und Hydroxysuccinsäure.

Bevorzugt wird in den erfindungsgemäßen Formmassen als Komponente E) ein modifizierter Polyphenylenether eingesetzt, der durch Umsetzen von

$e_1$) 9,94 bis 99,94 Gew.-% eines unmodifizierten Polyphenylenethers,
$e_2$) 0 bis 88 Gew.-% eines vinylaromatischen Polymeren,
$e_3$) 0,05 bis 10 Gew.-% mindestens einer Verbindung aus der Gruppe gebildet aus
$e_{31}$) einer $\alpha,\beta$-ungesättigten Dicarbonylverbindung,
$e_{32}$) eines Amid-Gruppen enthaltenden Monomeren mit einer polymerisierbaren Doppelbindung und
$e_{33}$) eines Lactam-Gruppen enthaltenden Monomeren mit einer polymerisierbaren Doppelbindung,
$e_4$) 0 bis 80 Gew.-% weiterer pfropfaktiver Monomerer und
$e_5$) 0,01 bis 0,09 Gew.-% eines Radikalstarters

wobei sich die Gewichtsprozente auf die Summe von $e_1$) bis $e_4$) beziehen, im Verlaufe von 0,5 bis 15 Minuten bei 240 bis 375 °C in geeigneten Misch- und Knetaggregaten wie Zweischneckenextrudern erhältlich ist.

Das vinylaromatische Polymer $e_2$) soll vorzugsweise mit dem eingesetzten Polyphenylenether verträglich sein.

Das Molekulargewicht dieser an sich bekannten Polymeren liegt im allgemeinen im Bereich von 1500 bis 2 000 000, vorzugsweise im Bereich von 70 000 bis 1 000 000.

Beispiele für bevorzugte, mit Polyphenylenethern verträgliche vinylaromatische Polymere sind der bereits erwähnten Monographie von Olabisi, S. 224 bis 230 und 245 zu entnehmen. Nur stellvertretend seien hier vinylaromatische Polymere aus Styrol, Chlorstyrol, $\alpha$-Methylstyrol und p-Methylstyrol genannt; in untergeordneten Anteilen (vorzugsweise nicht mehr als 20, insbesondere nicht mehr als 8 Gew.-%), können auch Comonomere wie (Meth)acrylnitril oder (Meth)acrylsäureester am Aufbau beteiligt sein. Besonders bevorzugte vinylaromatische Polymere sind Polystyrol und schlagzäh modifiziertes Polystyrol. Es versteht sich, daß auch Mischungen dieser Polymeren eingesetzt werden können. Die Herstellung erfolgt vorzugsweise nach dem in der EP-A-302 485 beschriebenen Verfahren.

Gegebenenfalls können bei der Herstellung des modifizierten Polyphenylenethers auch weitere Comonomere $e_4$) eingesetzt werden, die unter den Herstellungsbedingungen mit den Komponenten $e_1$) und gegebenenfalls $e_2$) reagieren bzw. auf diese aufpfropfen. Beispielsweise seien hier Acrylsäure, Methacrylsäure, Acrylate, Methacrylate und vinylaromatische Monomere wie Styrol, $\alpha$-Methylstyrol und Vinyltoluol genannt, um nur einige aufzuführen.

Der Anteil der Komponente $e_4$) beträgt 0 bis 80, vorzugsweise 0 bis 45 und insbesondere nicht mehr als 20 Gew.-%, bezogen auf die Summe der Komponenten $e_1$) bis $e_5$). Besonders bevorzugt werden Formmassen, die keine Komponente $e_4$) enthalten.

Als Radikalstarter $e_5$) seien genannt:

Di-(2,4-dichlorbenzoyl)peroxid, tert.-Butylperoxid, Di-(3,5,5-trimethylhexanol)peroxid, Dilauroylperoxid, Didecanoylperoxid, Dipropionylperoxid, Dibenzoylperoxid, tert.-Butylperoxy-2-ethylhexoat, tert.-Butylperoxydiethylacetat, tert.-Butylperoxyisobutyrat, 1,1-Di-tert.-butylperoxy-3,3,5-trimethylcyclohexan, tert.-Butylperoxyisopropylcarbonat, tert.-Butylperoxy-3,3,5-trimethylhexoat, tert.-Butylperacetat, tert.-Butylperbenzoat, 4,4-Di-tert.-butylperoxyvaleriansäure-butylester, 2,2-Ditert.-butylperoxybutan, Dicumylperoxid, tert.-Butylcumylperoxid, 1,3-Di(tert.-butylperoxyisopropyl)benzol und Di-tert.-butylperoxid. Genannt seien ebenfalls organische Hydroperoxide wie Di-isopropylbenzolmonohydroperoxid, Cumolhydroperoxid, tert.-Butylhydroperoxid, p-Menthylhydroperoxid und Pinanhydroperoxid sowie hochverzweigte Alkane der allgemeinen Struktur

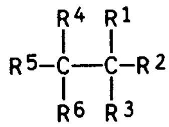

wobei $R^1$ bis $R^6$ Alkylgruppen mit 1 bis 8 C-Atomen, Alkoxygruppen mit 1 bis 8 C-Atomen, Arylgruppen wie Phenyl, Naphthyl oder 5- oder 6-gliedrige Heterocyclen mit einem $\pi$-Elektronensystem und Stickstoff, Sauerstoff oder Schwefel als Heteroatomen darstellen. Die Substituenten $R^1$ bis $R^6$ können ihrerseits funktionelle Gruppen als Substituenten enthalten, wie Carboxyl-, Carboxylderivat-, Hydroxyl-, Amino-, Thiol- oder Epoxidgruppen. Beispiele sind 2,3-Dimethyl-2,3-diphenylbutan, 3,4-Dimethyl-3,4-diphenylhexan und 2,2,3,3-Tetraphenylbutan.

Die Herstellung der erfindungsgemäßen thermoplastischen Formmassen ist an sich nicht kritisch, jedoch haben sich einige Verfahren als besonders geeignet erwiesen.

So kann beispielsweise aus den Komponenten A) und gegebenenfalls C) und/oder D) und/oder E), vorzugsweise auf einem Extruder, ein Granulat hergestellt werden. Auf dieses Granulat kann nun die Komponente B) als Pulver, Schmelze oder Lösung aufgetragen werden, wobei in einer bevorzugten Ausführungsform die Temperatur des Granulats größer ist als der Schmelzpunkt der Komponente B). Für die besonders bevorzugten Fälle der Verwendung von Distearylketon und Dibehenylketon als Komponente B) haben sich Granulat-Temperaturen von 100 bis 140 ° C als besonders geeignet erwiesen.

In einem weiteren bevorzugten Verfahren zur Herstellung der erfindungsgemäßen thermoplastischen Formmassen wird die Komponente B) zu der Schmelze der Komponente A) und gegebenenfalls C) und/oder D) und/oder E) gegeben, d.h. einkonfektioniert. Hier haben sich vor allem Extruder, insbesondere Zweischneckenextruder bewährt. Andere Konfektioniereinrichtungen wie Einwellenextruder und Kneter können selbstverständlich ebenfalls eingesetzt werden. Die Verarbeitungstemperaturen liegen üblicherweise ca. 10 bis 50 ° C über dem Schmelzpunkt des verwendeten Polyamids (Komponente A). Bevorzugt werden die Produkte dann extrudiert und granuliert.

Die Komponente B) kann auch zur Polykondensation der Komponente A), die bevorzugt in der Schmelze ausgeführt wird, zugegeben werden. Hierbei hat sich eine anschließende Festphasenkondensation als besonders geeignet erwiesen, wonach die Produkte dann - wie bereits geschildert - gegebenenfalls mit den Komponenten C) und/oder D) und/oder E), bevorzugt extrudiert und granuliert werden.

Auch die Zugabe der Komponente B) in den Polykondensationskessel einer diskontinuierlichen Polyamidkondensation ist möglich.

In einem besonders geeigneten Herstellverfahren für die Mischungen aus Polyamiden und Polyphenylenethern wird die Komponente B) bei Raumtemperatur auf ein Granulat der Komponente E) in Lösung oder als Pulver aufgetragen und anschließend diese Mischung mit den Komponenten A) sowie gegebenenfalls D) und /oder C) einkonfektioniert.

Die erfindungsgemäßen thermoplastischen Formmassen zeichnen sich durch ein insgesamt ausgewogenes Eigenschaftsspektrum, insbesondere durch gute Fließfähigkeit und hohe Verarbeitungsstabilität aus. Sie eignen sich zur Herstellung von Fasern, Folien und Formkörpern.

Beispiele

Beispiel 1 bis 3

Ein Polyamid, das zu 30 Gew.-% aus Einheiten, die sich von $\epsilon$-Caprolactam ableiten und zu 70 Gew.-% aus Einheiten, die sich von Terephthalsäure und Hexamethylendiamin ableiten, besteht und eine Viskositätszahl von 142 ml/g (gemessen an einer 0,5 gew.-%igen Lösung in konzentrierter Schwefelsäure bei 25 ° C) aufweist (PA 6/6T) wurde auf einem Zweiwellenextruder (ZSK 30 der Fa. Werner & Pfleiderer) mit verschiedenen Dialkylketonen konfektioniert (250 U/min, 320 ° C, Beladung von 25 kg/h). Die Produkte wurden zu einem Strang extrudiert und granuliert.

Vergleichsbeispiele V1 bis V4

Es wurde wie in den Beispielen 1 bis 3 gearbeitet, jedoch statt Dialkylketonen wurde entweder kein Schmiermittel (V1) oder es wurden Stearate (V2 bis V4) zugesetzt.

Beispiel 4

Ein teilaromatisches Copolyamid (PA 6/6T wie in den Beispielen 1 bis 3) wurde mit einem Schlagzähmodifier aus Ethylen/n-Butylacrylat/Acrylsäure im Gewichtsverhältnis 59,5/35/5,5 (MFI = 9,8 g/10 min bei 190 °C und 2,16 kg Auflagegewicht) und Schnittglasfasern mit einem Durchmesser von 10 µm, einer Faserlänge von 4,5 mm und einer Aminosilan-Schlichte (Gevetex® 5135 der Fa. Gevetex) sowie Distearylketon analog den Beispielen 1 bis 3 verarbeitet.

Vergleichsbeispiele V5 und V6

Es wurde wie in Beispiel 4 gearbeitet, statt Distearylketon wurde jedoch Ca-Stearat (V5) oder kein Schmiermittel (V6) zugesetzt.

Beispiel 5

Ein Polyamid, das aus Einheiten, die sich von Hexamethylendiamin und Adipinsäure ableiten, besteht und eine Viskositätszahl von 145 ml/g (gemessen an einer 0,5 gew.-%igen Lösung in konzentrierter Schwefelsäure bei 25 °C) (PA 66, Ultramid® A3 der BASF) wurde wie in den Beispielen 1 bis 3 mit Distearylketon konfektioniert, extrudiert und granuliert.

Vergleichsbeispiele V7 und V8

Es wurde wie in Beispiel 5 gearbeitet, statt Distearylketon wurde jedoch Al-Tristearat (V7) oder kein Schmiermittel (V8) zugesetzt.

Beispiel 6

Ein Polyamid, das aus Einheiten, die sich von Tetramethylendiamin und Adipinsäure ableiten, besteht und eine Viskositätszahl von 185 ml/g (PA 46) aufweist, wurde wie in den Beispielen 1 bis 3 mit Distearylketon konfektioniert, extrudiert und granuliert.

Vergleichsbeispiel V9 und V10

Es wurde wie in Beispiel 6 gearbeitet, statt Distearylketon wurde jedoch Calciumstearat (V9) oder kein Schmiermittel (V10) zugesetzt.

Von den Produkten wurden die Viskositätszahlen VZ (gemessen an 0,5 gew.-%igen Lösungen in konzentrierter Schwefelsäure bei 25 °C), die Schmelzindices MFI nach DIN 53 735 (bei 325 °C im Falle von PA 6/6T und bei 275 °C im Falle von PA 66, bei einem Auflagegewicht von 2,16 kg nach 4 min und nach 20 min Aufheizzeit), der Fülldruck $P_{Füll}$ (d.h. der Mindestdruck zum Füllen eines Testkästchens, vgl. Ultramid®-Broschüre der BASF S. 46, Abb. 38; bei 330 °C im Falle von PA 6/6T und bei 280 °C im Falle von PA 66) und die Schädigungsarbeit $W_{50}$ nach DIN 53 443 bestimmt.

Über die Zusammensetzungen und Eigenschaften gibt die Tabelle Aufschluß.

Als Distearylketon wurde Loxiol® VPG 2036 und als Dibehenylketon Loxiol® VPG 2037 der Fa. Henkel, Düsseldorf verwendet.

Tabelle 1

| Beispiel | A) [Gew.-%] | B) [Gew.-%] | Zusammensetzung C) Kautschuk [Gew.-% bezogen auf A)+B)] | D) Glasfasern [Gew.-% bezogen auf A)+B)] | VZ [ml/g] | MFI 4min [g/10min] | MFI 20min [g/10min] | $P_{Füll}$ [bar] | $W_{50}$ [J/m] |
|---|---|---|---|---|---|---|---|---|---|
| 1 | 99,5 PA6/6T | 0,5 Distearylketon | | | 140 | 48 | 60 | 440 | 92 |
| 2 | 99,0 PA6/6T | 1,0 Distearlyketon | | | 143 | 55 | 60 | 400 | 110 |
| 3 | 99,5 PA6/6T | 0,5 Dibehenylketon | | | 138 | 50 | 54 | 440 | 92 |
| V1 | 100,0 PA6/6T | - | | | 143 | 33 | 33 | 590 | 100 |
| V2 | 99,5 PA6/6T | 0,5 Ca-Stearat | | | 108 | 64 | 127 | 375 | 7 |
| V3 | 99,5 PA6/6T | 0,5 Stearylstearat | | | 119 | 55 | 99 | 400 | 13 |
| V4 | 99,3 PA6/6T | 0,7 Al-Tristearat | | | 99 | 75 | 103 | 360 | 5 |
| 4 | 99,5 PA6/6T | 0,5 Distearylketon | 16,6 | 50 | 145 | 45 | 45 | 510 | 14 |
| V5 | 99,5 PA6/6T | 0,5 Ca-Stearat | 16,6 | 50 | 119 | 50 | 98 | 490 | < 1 |
| V6 | 100,0 PA6/6T | - | 16,6 | 50 | 143 | 34 | 30 | 890 | 12 |
| 5 | 99,3 PA66 | 0,7 Distearylketon | | | 141 | 180 | 171 | 320 | >140 |
| V7 | 99,3 PA66 | 0,7 Al-Tristearat | | | 126 | 185 | 212 | 300 | 95 |
| V8 | 100,0 PA66 | - | | | 143 | 127 | 123 | 490 | >140 |
| 6 | 99,3 PA46 | 0,7 Distearylketon | | 50 | 149 | 72 | 202 | 500 | 10 |
| V9 | 99,3 PA46 | 0,7 Ca-Stearat | | 50 | 119 | 115 | >500 | 395 | < 1 |
| V10 | 100,0 PA46 | - | | 50 | 142 | 49 | 139 | 800 | 7 |

Polyphenylenether/Polyamid-Mischungen

Ein modifizierter Polyphenylenether (Komponente E) wurde hergestellt aus:

$e_1$) 90 Gew.-% Poly(2,6-dimethyl-1,4-phenylen)ether mit einer reduzierten Viskosität $\eta_{red}$ = 0,58

| | |
|---|---|
| | dl/g (gemessen in einer 1 gew.%igen Lösung von $CHCl_3$ bei 25 °C), |
| $e_2$) 9 Gew.-% | Polystyrol (MFI (200 °C/5 kg) = 22 g/10') und |
| $e_{31}$) 0,92 Gew.-% | Fumarsäure, |
| $e_5$) 0,08 Gew.-% | Dicumylperoxid |

welche in einem Zweischneckenextruder bei 280 °C gemischt wurden. Die Schmelze wurde entgast, als Strang extrudiert, durch ein Wasserbad geleitet und granuliert.

Beispiel 7

Ein Polyamid gemäß Beispiel 5 wurde mit dem modifizierten Polyphenylenether und einem Styrol-Butadien-Styrol-Dreiblockcopolymer als Schlagzähmodifier (Styrolgehalt: 31 Gew.-%, $\overline{M}_w$ (Gewichtsmittel): 72 000 (bestimmt durch GPC (Gelpermeationschromatographie) in THF bei 25 °C (Polystyrolstandard als Eichsubstanz), Cariflex® TR 1102 der Firma Shell AG) sowie Distearylketon auf einem Zweiwellenextruder konfektioniert. Die Zylindertemperaturen lagen bei 280, 300 und 320 °C.

Die Schmelze wurde als Strang extrudiert, gehärtet und granuliert. Das Granulat wurde bei 80 °C im Vakuum getrocknet und bei 280 °C durch Spritzguß zu Normprüfkörpern verarbeitet.

Vergleichsbeispiele V11 bis V13

Es wurde wie in Beispiel 7 gearbeitet, jedoch statt Distearylketon entweder Pentaerythrittetrastearat (V11 gemäß EP-A 234 060) oder Stearinsäure (V12 gemäß EP-A 308 671) oder kein Schmiermittel (V13) zugesetzt.

Es wurden folgende mechanische Prüfungen durchgeführt:

| | |
|---|---|
| Kerbschlagzähigkeit $a_k$ [kJ/m$^2$] | DIN 53435 |
| Schlagzähigkeit $a_n$ [kJ/m$^2$] (k.B. = kein Bruch) | DIN 53435 |
| Durchstoßarbeit (DSA) [Nm] | DIN 53443 |
| MVI (275 °C/10kg) [cm$^3$/10 min] | DIN 53735 |
| E-Modul ($E_z$) [N/mm] | DIN 53457 |

Die Zusammensetzungen der Formmassen und die Ergebnisse der Messungen sind der Tabelle 2 zu entnehmen.

Tabelle 2

| Beispiel | A) [Gew.-%] | B) [Gew.-%] | Zusammensetzung C) Kautschuk [Gew.-% bezogen auf A)+B)] | E) PPE | Konfektioniertemperatur | MVI [cm³/10 min] | $a_k$ [kJ/m²] | DSA [Nm] |
|---|---|---|---|---|---|---|---|---|
| 7 | 99,3 PA66 | 0,7 Distearylketon | 22,6 | 100 | 280 | 22 | 33 | 51 |
| | | | | | 300 | 21 | 37 | 53 |
| | | | | | 320 | 22 | 33 | 64 |
| V11 | 99,3 PA66 | 0,7 Pentaerythrit-tetrastearat | 22,6 | 100 | 280 | 23 | 27 | 25 |
| | | | | | 300 | 23 | 30 | 48 |
| | | | | | 320 | 24 | 31 | 55 |
| V12 | 99,3 PA66 | 0,7 Stearinsäure | 22,6 | 100 | 280 | 21 | 33 | 48 |
| | | | | | 300 | 23 | 29 | 47 |
| | | | | | 320 | 25 | 27 | 43 |
| V13 | 100 PA66 | - | 22,6 | 100 | 280 | 16 | 32 | 52 |
| | | | | | 300 | 16 | 37 | 55 |
| | | | | | 320 | 16 | 33 | 62 |

Wie die Beispiele belegen, führt der Zusatz der erfindungsgemäßen Komponente B) zu einer Erhöhung der Fließfähigkeit, ohne die Zähigkeit negativ zu beeinflussen. Dies gilt für einen breiten Temperaturbereich.

Beispiel 8

Poly-ε-Caprolactam (PA 6, VZ-Zahl: 190 ml/g, Ultramid® B 35 der BASF AG) wurde bei 300°C Zylindertemperatur mit modifiziertem PPE und Schlagzähmodifier sowie Schmiermittel gemäß Beispiel 7 konfektioniert, extrudiert und granuliert.

Beispiel 9

PA 6 und PPE gemäß Beispiel 8 wurden bei 300 °C Zylindertemperatur mit einem hydrierten Styrol-Butadien-Styrol-Dreiblockcopolymer als Schlagzähmodifier (Polystyrolgehalt 30 Gew.-%; Kraton® G 1650 der Firma Shell AG) und Dibehenylketon als Schmiermittel konfektioniert, extrudiert und granuliert.

Beispiel 10

PA 66, PPE und Distearylketon gemäß Beispiel 7 wurden mit Glasfasern (Faserdurchmesser ca. 13 µm) bei 300 °C konfektioniert, extrudiert und granuliert.

Beispiel 11

PA 66, PPE und Schlagzähmodifier gemäß Beispiel 7 wurden mit Dibehenylketon als Schmiermittel und calciniertem Kaolin als Füllstoff bei 300 °C konfektioniert, extrudiert und granuliert.

Beispiel 12

PA 66, PPE und Distearylketon gemäß Beispiel 7 und Schlagzähmodifier gemäß Beispiel 9 sowie roter Phosphor als Flammschutzmittel (mittlere Teilchengröße $d_{50}$ = 45 µm) wurden bei 300 °C konfektioniert, extrudiert und granuliert.

Die Verarbeitung zu Prüfkörpern und die Messungen erfolgten gemäß Beispiel 7.

In Beispiel 12 erfolgte zusätzlich eine Brandschutzprüfung nach UL-94 an 1, 6 bzw. 0,8 mm dicken Stäben, wobei jeweils die Klassifizierung V-0 erreicht wurde.

Die Zusammensetzung der Formmassen und Ergebnisse der Messungen sind der Tabelle 3 zu entnehmen.

Tabelle 3

| Bei-spiel | A) [Gew.-%] | B) [Gew.-%] | Zusammensetzung C) Kautschuk [jeweils Gew.-%] | D) Zusatz-stoffe [bezogen auf A)+B)] | E) PPE | MVI [$cm^3$/10 min] | $a_k$ [$kJ/m^2$] | DSA [Nm] | $a_n$ [$kJ/m^2$] | $E_z$ [$N/mm$] |
|---|---|---|---|---|---|---|---|---|---|---|
| 8 | 98,9 PA 6 | 1,1 Distearyl-keton | 22,5 | - | 100 | 29 | 42 | 67 | k.B. | 2350 |
| 9 | 99,3 PA 6 | 0,7 Dibehenyl-keton | 22,5 | - | 100 | 22 | 35 | 55 | k.B. | 2300 |
| 10 | 98,6 PA66 | 1,4 Distearyl-keton | - | 85 | 100 | 12 | 11 | - | 48 | 9000 |
| 11 | 99 PA66 | 1 Dibehenyl-keton | 19 | 50 | 72 | 19 | 12 | 32 | k.B. | 4300 |
| 12 | 98,8 PA66 | 1,2 Distearyl-keton | 22,5 | 7 | 100 | 23 | 21 | 45 | k.B. | 2450 |

Beispiel 13

44 Gew.-% PA66, 43,8 Gew.-% modifiziertes PPE und 12 Gew.-% eines hydrierten Zweiblockcopolymeren (Styrol-Butadien) (Polystyrolgehalt: 37 Gew.-%; Kraton® G1701 der Firma Shell AG) und 0,2 Gew.-%

eines phenolischen Stabilisators (Irganox® 1010 der Firma Ciba Geigy AG) wurden bei 300°C konfektioniert.

Auf das 130-140°C heiße Granulat wurden 0,4 Gew.-Teile, bezogen auf 100 Gew.-Teile der o.g. Mischung Distearylketon aufgezogen, so daß 0,9 Gew.-% Distearylketon, bezogen auf 100 Gew.-% der Summe aus A) und B) in der Mischung vorlagen. Das Granulat wurde bei 280°C zu Prüfkörpern verarbeitet.

Die Kerbschlagzähigkeit $a_k$ betrug 25 kJ/m$^2$,
die Durchstoßarbeit DSA betrug 68 Nm,
die Schlagzähigkeit $a_n$ ergab keinen Bruch und
der Elastizitätsmodul betrug 2310 N/mm.

## Patentansprüche

1. Thermoplastische Formmassen, enthaltend als wesentliche Komponenten
   A) 96 bis 99,9 Gew.-% mindestens eines Polyamids
   B) 0,1 bis 4 Gew.-% an Dialkylketonen der allgemeinen Formel I

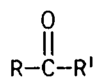

I

   in der R und R' Alkylgruppen mit 10 bis 30 C-Atomen bedeuten, oder deren Mischungen,
   sowie, bezogen auf die Summe der Komponenten A) und B)
   C) 0 bis 40 Gew.-% eines schlagzäh modifizierenden Kautschuks
   D) 0 bis 60 Gew.-% faser- oder teilchenförmige Füllstoffe oder deren Mischungen und
   E) 0 bis 120 Gew.-% eines modifizierten Polyphenylenethers.

2. Thermoplastische Formmassen nach Anspruch 1, dadurch gekennzeichnet, daß die Komponente A) einen Schmelzpunkt von mehr als 250°C aufweist.

3. Thermoplastische Formmassen nach den Ansprüchen 1 bis 2, dadurch gekennzeichnet, daß als Komponente A) teilaromatische Copolyamide eingesetzt werden, die im wesentlichen aufgebaut sind aus
   $A_1$) 20 - 90 Gew.-% Einheiten, die sich von Terephthalsäure und Hexamethylendiamin ableiten,
   $A_2$) 0 - 50 Gew.-% Einheiten, die sich von $\epsilon$-Caprolactam ableiten und
   $A_3$) 0 - 80 Gew.-% Einheiten, die sich von Adipinsäure und Hexamethylendiamin ableiten,
   $A_4$) 0 - 40 Gew.-% weiteren polyamidbildenden Monomeren,
   wobei der Anteil der Komponenten ($A_2$) oder ($A_3$) oder ($A_4$) oder deren Mischungen mindestens 10 Gew.-% beträgt.

4. Thermoplastische Formmassen nach den Ansprüchen 1 bis 2, dadurch gekennzeichnet, daß als Komponente A) ein Polyamid eingesetzt wird, das sich von Tetramethylendiamin und Adipinsäure ableitet.

5. Thermoplastische Formmassen nach den Ansprüchen 1 bis 4, dadurch gekennzeichnet, daß die Komponente B) in einer Menge von 0,3 bis 1 Gew.-% eingesetzt wird.

6. Thermoplastische Formmassen nach den Ansprüchen 1 bis 5, dadurch gekennzeichnet, daß als Komponente B) Distearylketon oder Dibehenylketon eingesetzt wird.

7. Verfahren zur Herstellung der thermoplastischen Formmassen gemäß den Ansprüchen 1 bis 6, dadurch gekennzeichnet, daß man die Komponente B) auf ein Granulat der Komponente A), das gegebenenfalls die Komponenten C) und/oder D) und/oder E) enthält und dessen Temperatur größer ist als der Schmelzpunkt der Komponente B), aufträgt.

8. Verfahren zur Herstellung der thermoplastischen Formmassen gemäß den Ansprüchen 1 bis 6, dadurch gekennzeichnet, daß die Komponente B) der Schmelze der Komponente A) und gegebenenfalls C)

und/oder D) und/oder E) zugegeben wird.

**9.** Verwendung der thermoplastischen Formmassen gemäß den Ansprüchen 1 bis 6 zur Herstellung von Fasern, Folien und Formkörpern.

**10.** Formkörper, erhältlich aus den thermoplastischen Formmassen gemäß den Ansprüchen 1 bis 6 als wesentliche Komponenten.